# EUROPÄISCHE PATENTSCHRIFT

(11) **EP 1 893 988 B1**
(45) Veröffentlichungstag und Bekanntmachung des Hinweises auf die Patenterteilung: **11.12.2013**
(21) Anmeldenummer: 06754212.6
(22) Anmeldetag: 08.06.2006
(51) Int. Cl.: G01N 27/02, G01N 27/06, A47L 15/44, A47L 15/42

(54) **SENSOREINRICHTUNG UND VERFAHREN ZUR HERSTELLUNG EINER SENSOREINRICHTUNG**
SENSOR MECHANISM AND METHOD FOR THE PRODUCTION THEREOF
DISPOSITIF CAPTEUR ET PROCEDE DE FABRICATION ASSOCIE

(30) Priorität: 21.06.2005 DE 102005029047
(43) Veröffentlichungstag der Anmeldung: 05.03.2008
(73) Patentinhaber: Miele & Cie. KG, 33332 Gütersloh (DE)
(72) Erfinder: HEITMANN, Michael, 33739 Bielefeld (DE)
(74) Vertreter: Bauch, Uwe
(86) Internationale Anmeldenummer: PCT/EP2006/005466
(87) Internationale Veröffentlichungsnummer: WO 2006/136293

(56) Entgegenhaltungen:
- DE-A1- 10 005 491
- SU-A1- 418 782
- US-A- 3 396 331
- US-A- 5 959 455

## Beschreibung

Die vorliegende Erfindung betrifft einen Leitwertsensor für eine Spülmaschine, mit einer Rohrleitung, die in Form einer "8" durchströmbar ist und als Joch eine Spulenanordnung mit einer Primärspule und einer Sekundärspule umgibt, welche im Bereich des Kreuzungspunktes der "8" angeordnet ist, wobei an einer ersten Schleife ein Zulauf und an einer zweiten Schleife ein Ablauf ausgebildet ist und ferner ein Verfahren zur Herstellung eines Leitwertsensors.

Aus der DE 100 05 491 A1 ist ein elektrodenloses Gerät zur Messung der elektrischen Leitfähigkeit von Flüssigkeiten nach der induktiven Methode bekannt, bei dem eine geschlossene Rohrleitung aus nicht leitendem Material vorgesehen ist, die mit einem Fluid durchströmbar ist. Diese Rohrleitung besitzt die Form einer "8", wobei die Schleife zweimal durch Ringkerne geführt wird. Die Rohrleitung wird dabei von einer Messflüssigkeit durchströmt, und durch Einlegen einer Wechselspannung an einer ersten Spule wird eine Spannung an einer zweiten Spule induziert, die zur Bestimmung der Leitfähigkeit des Fluides herangezogen werden kann. Die Herstellung solcher Geräte erfolgt meist durch spanabhebende Verfahren, was einen hohen Fertigungsaufwand bedingt und zudem zu hohen Strömungsverlusten führt, die durch eine größere Pumpleistung kompensiert werden müssen.

Ferner sind Leitwertsensoren bekannt, bei denen Tauchsensoren vorgesehen sind, die an ein vorhandenes Rohrsystem integriert werden. Allerdings werden dabei nicht nur Leitwertänderungen in dem Fluid, sondern im gesamten Kreislauf erfasst. Bei der Anwendung in Spülmaschinen würden sich unterschiedliche Messwerte allein durch die Beladung mit leitfähigen Instrumenten aus Metall oder mit nicht leitfähigen Gegenständen ergeben.

Es ist daher Aufgabe der vorliegenden Erfindung einen Leitwertsensor zu schaffen, der einfach herzustellen ist und nur einen geringen Strömungswiderstand besitzt.

Diese Aufgabe wird mit einem Leitwertsensor mit den Merkmalen des Anspruches 1 sowie mit einem Verfahren zur Herstellung eines Leitwertsensors mit den Merkmalen des Anspruchs 8 gelöst.

Erfindungsgemäß ist die Rohrleitung aus mindestens zwei Teilen gebildet und die Trennebene der beiden Teile ist derart angeordnet, dass sie vor dem Verbinden der beiden Teile ein Aufstecken der Spulenanordnung zulässt, so dass der Leitwertsensor einfach herstellbar ist und die einzelnen Teile sich im Rahmen einer industriellen Serienfertigung kostenoptimiert montieren lassen. Zudem sorgen die verschweißten Gehäuseteile für geringe Reibungsverluste und können eine optimierte Strömungsführung gewährleisten. Der Einsatz von Kunststoffmaterial hat zudem den Vorteil, dass auch aggressive Medien von dem Leitwertsensor durchströmt werden können und die Messung der Leitfähigkeit des durchströmenden Fluides quasi verschleißfrei erfolgen kann.

Gemäß einer bevorzugten Ausgestaltung der Erfindung ist eine Trennebene der Gehäuseteile senkrecht zu der durch die "8" aufgespannte Ebene angeordnet. Dadurch können zwei oder vier identisch ausgebildete Gehäuseteile im Bereich der Trennebene miteinander verbunden werden, damit das Gehäuse einen geschlossenen Strömungsbereich erhält. Im Bereich des Kreuzungspunktes der "8" sind die mit Fluid durchströmten Leitungen vorzugsweise voneinander getrennt. Denn dadurch kann das Gehäuse strömungsoptimiert ausgebildet sein und von einem Einlass zu einem Auslass wird der Fluidstrom in zwei Teile getrennt, die wellenförmig das Gehäuse durchströmen. Dadurch werden Strömungsverluste durch Wirbel weitgehend vermieden.

An dem Zulauf und dem Ablauf kann dabei jeweils ein Stutzen zum Anschluss einer Zulaufleitung bzw. einer Ablaufleitung angeschweißt sein. Dadurch wird gewährleistet, dass der Verbindungsbereich zwischen Zulaufleitung und Zulaufstutzen und Ablaufleitung und Ablaufstutzen dicht miteinander verbunden werden kann. Ansonsten könnten die im Bereich der Trennebene gebildeten Materialunebenheiten Dichtigkeitsprobleme herbeiführen.

Für eine kostenoptimierte Herstellung sind vorzugsweise vier identische Gehäuseteile vorgesehen, die jeweils mit einem Deckel zur Bildung einer geschlossenen Rohrleitung verbunden sind. Die Deckel können dabei in die Gehäuseteile zur Bildung gekrümmter Strömungswege eingreifen, so dass der Strömungsweg wellenförmig das Gehäuse durchläuft.

Für eine kompakte Bauweise sind an den Gehäuseteilen zudem Haltearme zur Befestigung einer Leiterplatte ausgebildet.

Nach dem erfindungsgemäßen Verfahren zur Herstellung eines Leitwertsensors wird zunächst mindestens eine Spule auf einen mittleren Leitungsabschnitt eines ersten Gehäuseteils aufgesteckt und anschließend das erste Gehäuseteil mit einem zweiten Gehäuseteil verschweißt, so dass in den verschweißten Gehäuseteilen ein Teil einer verzweigten Rohrleitung ausgebildet ist, die in Form einer "8" durchströmbar ist. Das erste und das zweite Gehäuseteil können dabei auch mehrteilig ausgebildet sein, so dass beispielsweise vier Gehäuseteile miteinander verschweißt werden, wobei jeweils zwei Gehäuseteile auch mechanisch miteinander verbunden werden können, über eine Klemm- oder Rastverbindung. Das erfindungsgemäße Verfahren eignet sich besonders gut für die industrielle Serienfertigung und ermöglicht die Herstellung eines Leitwertsensors zu günstigen Preisen, wobei der Strömungskanal nur geringe Reibverluste mit sich bringt.

Für einen sicheren Anschluss einer Zulaufleitung und einer Ablaufleitung werden an einen Zulauf und einen Ablauf der Gehäuseteile jeweils ein hülsenförmiger Stutzen angeschweißt, an den dann die Leitungen angeschlossen werden können.

Zur Herstellung der gekrümmten Strömungswege können die Gehäuseteile jeweils mit einem Deckel zur Bildung einer geschlossenen Rohrleitung verschweißt werden. Dabei können die Gehäuseteile mit nur wenigen Bauteilen optimiert hergestellt werden. Der nachträgliche Einbau der Deckel als separate Bestandteile ermöglicht es, vor dem Verschweißen der beiden Baugruppen Kerne in die Leitungen einzusetzen und diese nach dem Verschweißen zu entfernen. Hierdurch wird das Eindringen von Schweißgut in die Leitungswege verhindert.

Die Erfindung wird nachfolgend anhand eines Ausführungsbeispieles mit Bezug auf die beigefügten Zeichnungen näher erläutert. Es zeigen:
- Figur 1:: eine perspektivische Ansicht eines erfindungsgemäßen Leitwertsensors im montierten Zustand;
- Figuren 2 - 6:: perspektivische Ansichten verschiedener Herstellungsschritte des erfindungsgemäßen Leitwertsensors und
- Figur 7:: eine Explosionsdarstellung des Leitwertsensors der Figur 1.

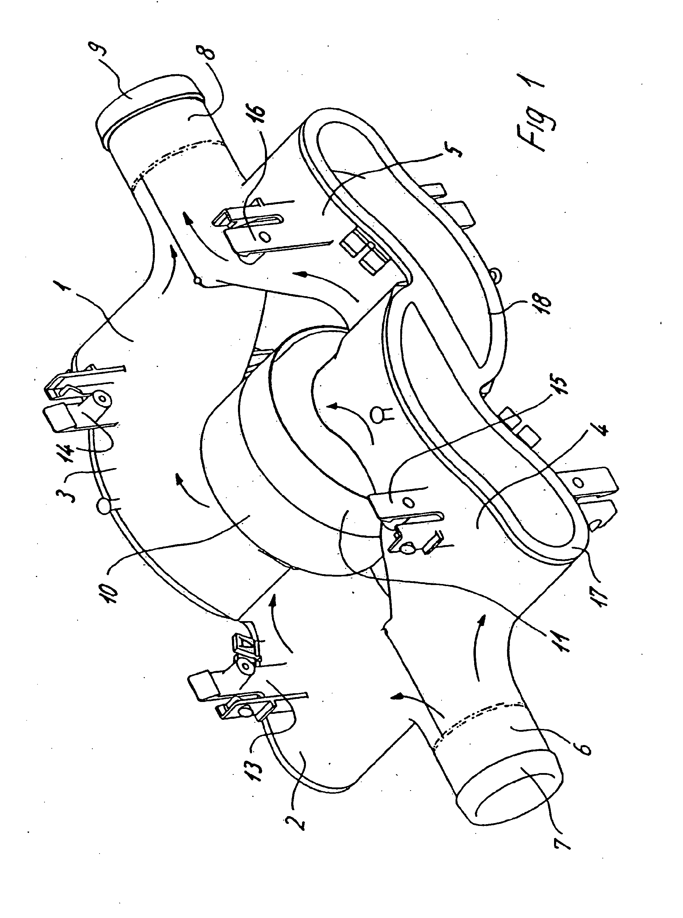

Ein in Figur 1 dargestellter Leitwertsensor 1 umfasst ein Gehäuse, der vier Gehäuseteile 2, 3, 4 und 5 aufweist. Die Gehäuseteile 2, 3, 4 und 5 bestehen aus Kunststoff und sind an gegenüberliegenden Seiten jeweils mit einem Stutzen 6 bzw. 8 verbunden, wobei der Stutzen 6 einen Zulauf bildet und einen verdickten Ring 7 ausbildet, an dem eine Zulaufleitung anschließbar ist. Gleichermaßen umfasst der Stutzen 8 einen verdickten Ring 9, an den eine Ablaufleitung anschließbar ist. Ein in den Stutzen 6 einströmendes Fluid wird entsprechend den dargestellten Pfeilen in zwei Strömungskanäle verzweigt und in Form einer "8" durch das aus den Gehäuseteilen 2, 3, 4 und 5 gebildete Gehäuse durchströmt, bis es zu dem Ablaufstutzen 8 gelangt.

Im Kreuzungsbereich der beiden Strömungskanäle ist eine Primärspule 10 und eine Sekundärspule 11 angeordnet, wobei die Primärspule 10 mit einer Spannung beaufschlagbar ist, beispielsweise einer Wechselspannung, so dass über das in dem Gehäuse durchströmende Fluid eine Leiterschleife gebildet ist und in der Sekundärspule 11 eine Spannung erzeugt wird, die proportional zu der erregenden Spannung und der Leitfähigkeit der Leiterschleife ist. Durch eine Messung der induzierten Spannung kann somit bei vorgegebenen Randbedingungen die Leitfähigkeit des durchstömenden Fluides soweit gemessen werden, dass der Grad an Verunreinigungen in dem Fluid erfassbar ist, was insbesondere für Spülmaschinen von Vorteil ist, gerade wenn hohe Anforderungen an die Hygiene gestellt werden. Gerade für Spülmaschinen im Krankenhausbereich kann so auch ein Reinigungsvorgang dokumentiert werden. An den Gehäuseteilen 2, 3, 4, 5 sind jeweils Haltearme 13, 14, 15 und 16 zur Befestigung einer Leiterplatte vorgesehen. Der Leitwertsensor kann somit kompakt aufgebaut sein und zudem auch bei Bedarf eine Auswerte- und Steuereinheit umfassen.

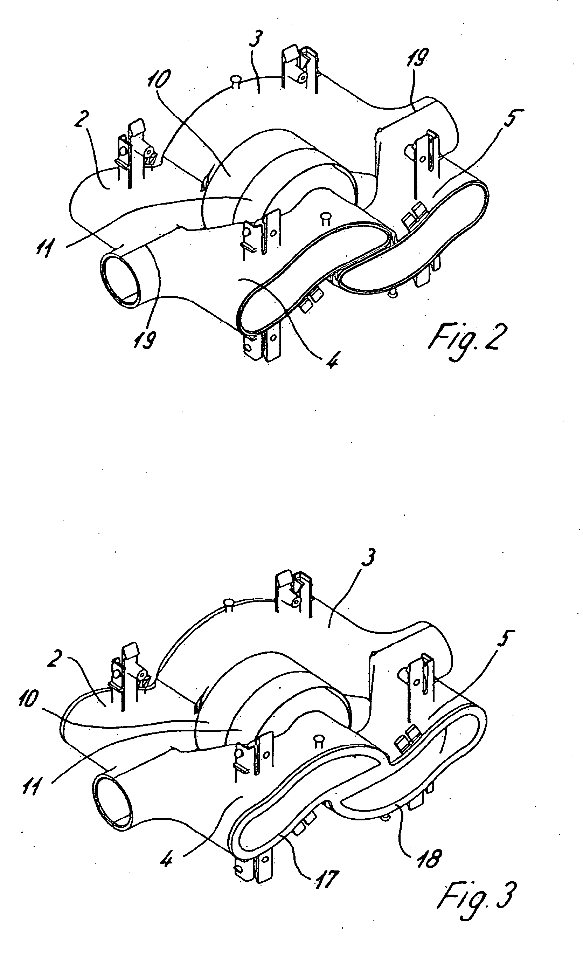

Die Herstellung des Leitwertsensors wird nun mit Bezug auf die Figuren 2 bis 6 näher beschrieben.

In einem ersten Schritt werden die Gehäuseteile 4 und 5 zu einer ersten Baugruppe zusammengefügt, wobei zur Fixierung entsprechende Klemm- oder Rastmittel vorhanden sein können. Anschließend wird die Primärspule 10 und die Sekundärspule 11 auf einen Mittelabschnitt der beiden Gehäuseteile 4 und 5 aufgesteckt. Dann werden die beiden Gehäuseteile 2 und 3, die identisch zu den Gehäuseteilen 4 und 5 ausgebildet sind, ebenfalls über Klemm- oder Rastmittel zu einer Baugruppe zusammengefügt und entlang einer Trennebene 19 mit den Gehäuseteilen 4 und 5 verschweißt, so wie dies in Figur 2 dargestellt ist. Dabei bilden die beiden Baugruppen zwei identische Teile.

Die Gehäuseteile 2, 3, 4 und 5 sind auf der zu der Primärspule 10 und Sekundärspule 11 abgewandten Seite zunächst offen ausgebildet und werden dann mit zwei Deckeln 17 und 18 verschlossen, wobei in dem in Figur 3 dargestellten Ausführungsbeispiel die Deckel jeweils einstückig ausgebildet sind und ein Deckel 17 das Gehäuseteil 4 verschließt und ein Deckel 18 das Gehäuseteil 5 verschließt. Die Gehäuseteile 2 und 3 werden gleichermaßen mit jeweils einem Deckel 17, 18 verschlossen.

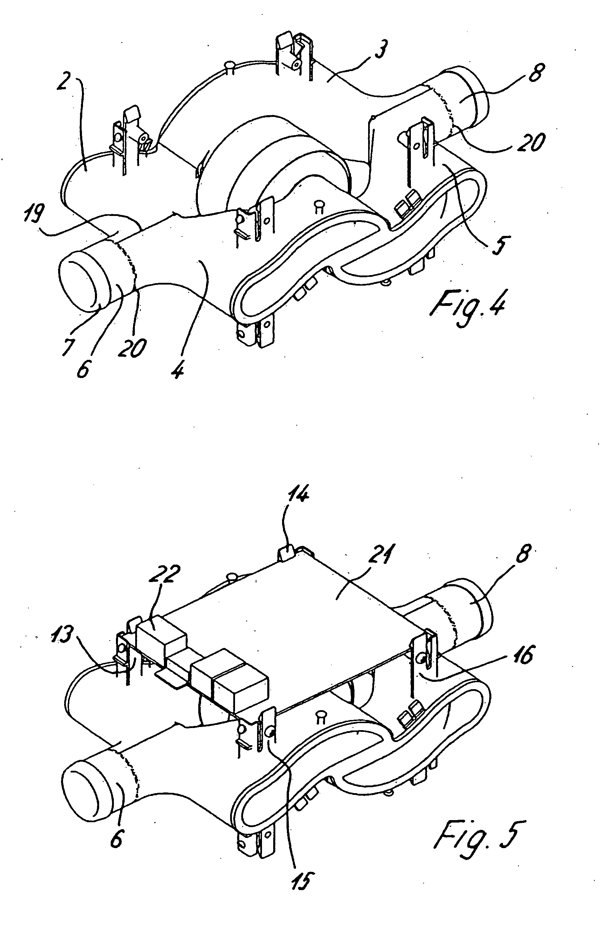

Wie in Figur 4 gezeigt ist, wird als nächstes ein Stutzen 6 zur Bildung eines Zulaufes an die Gehäuseteile 2 und 4 angeschweißt, wobei eine Schweißnaht 20 gebildet wird. Dadurch gelangt der Anschlussbereich für die Leitungen nicht in den Bereich der Trennebene 19 zwischen den Gehäuseteilen 2 und 4, an der kleine Grate bei dem Verschweißen nicht vermieden werden können.

Auf der gegenüberliegenden Seite wird gleichermaßen ein Stutzen 8 an die Gehäuseteile 3 und 5 zur Bildung eines Ablaufes angeschweißt.

Wie in Figur 5 gezeigt ist, wird in einem nächsten Schritt eine Leiterplatte 21 an die Haltearme 13, 14, 15 und 16 montiert, wobei entsprechende Rastmittel vorgesehen sind. Auf der Leiterplatte 21 können entsprechende Elektronikbausteine 22 zur Erfassung und Auswertung der Leitfähigkeit eines durchströmenden Fluides vorhanden sein, es ist auch möglich, Steuerelemente an der Leiterplatte 21 vorzusehen.

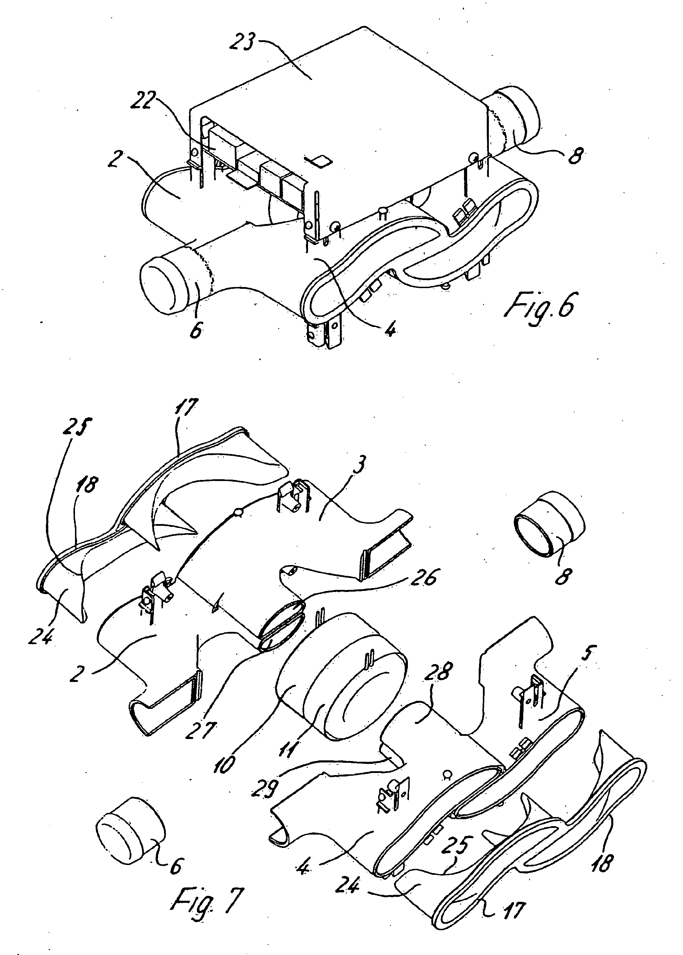

In Figur 6 ist der Leitwertsensor in vollständig montiertem Zustand gezeigt. Die Leiterplatte 21 ist von einem Gehäuse 23 überdeckt, das mit den Haltearmen 13, 14, 15 und 16 verschraubt ist. Der so gebildete Leitwertsensor kann nun an einem Gerät, wie einer Spülmaschine montiert werden, wobei an die Stutzen 6 und 8 eine Zulaufleitung bzw. eine Ablaufleitung anschließbar ist.

In Figur 7 ist der Leitwertsensor in einer Explosionsdarstellung gezeigt. Es ist insbesondere die Kontur der Deckel 17 und 18 zu erkennen, die an gegenüberliegenden Seiten Vorsprünge 24 aufweisen, die in die Gehäuseteile 2, 3, 4, 5 einfügbar sind, wobei die Vorsprünge zur Mitte der Deckel 17 und 18 hin sich verringern, so dass eine gekrümmte Wand 25 gebildet ist, die für einen gebogenen Strömungskanal sorgt, der nur geringe Reibverluste besitzt.

Ferner ist ein Mittelabschnitt der Gehäuseteile 2, 3, 4 und 5 dargestellt, der in die Primärspule 10 und die Sekundärspule 11 einfügbar ist. Das Gehäuseteil 2 umfasst einen im Querschnitt halbkreisförmigen Mittelabschnitt 27, der mit einem Mittelabschnitt 29 des Gehäuseteils 5 verschweißt wird. Gleichermaßen wird der im Querschnitt halbkreisförmige Mittelabschnitt 26 des Gehäuseteils 3 mit dem Mittelabschnitt 28 des Gehäuseteils 4 verbunden. Das Verschweißen der Mittelabschnitte 27 und 29, der Mittelabschnitte 26 und 28 und der beiden Baugruppen aus den Gehäuseteilen 2, 3, 4 und 5 entlang der Trennebene 19 erfolgt in einem Spiegelschweiß-Verfahren. Dabei werden in die Mittelabschnitte in den Zeichnungen nicht dargestellte Kerne eingesetzt, die den Austrieb von Schweißgut in die Rohrquerschnitte verhindern. Nach dem Zusammenfügen der beiden Baugruppen können die Kerne durch die Öffnungen, die erst im nächsten Schritt durch die Deckel 17 und 18 verschlossen werden, entfernt werden. Im Bereich der Primärspule 10 und der Sekundärspule 11 wird das Fluid somit in entgegengesetzte Richtungen geleitet, wobei zur Vermeidung von Strömungswiderständen ein Kontakt des Fluides in diesem Bereich vermieden ist.

In dem dargestellten Ausführungsbeispiel sind vier baugleiche Gehäuseteile 2, 3, 4 und 5 vorgesehen, die zu einem Gehäuse des Leitwertsensors zusammengesetzt werden. Es ist natürlich auch möglich, die Gehäuseteile 2 und 3 sowie 4 und 5 jeweils einstückig auszubilden, so dass nur zwei Gehäuseteile miteinander verbunden werden. Zudem werden die Deckel 17 und 18 jeweils auf die Gehäuseteile 2, 3, 4 und 5 zur Bildung eines geschlossenen Strömungskanals aufgesetzt. Es ist natürlich möglich, für jedes Gehäuseteil 2, 3, 4 und 5 einen getrennten Deckel vorzusehen.

## Patentansprüche

1. Leitwertsensor für eine Spülmaschine, mit einer Rohrleitung, die in Form einer "8" durchströmbar ist und als Joch eine Spulenanordnung mit einer Primärspule (10) und einer Sekundärspule (11) umgibt, welche im Bereich des Kreuzungspunktes der "8" angeordnet ist, wobei an einer ersten Schleife ein Zulauf (6) und an einer zweiten Schleife ein Ablauf (8) ausgebildet ist,
**dadurch gekennzeichnet,**
**dass** die Rohrleitung aus mindestens zwei Teilen oder Baugruppen gebildet ist und dass die Trennebene der beiden Teile derart angeordnet ist, dass sie vor dem Verbinden der beiden Teile ein Aufstecken der Spulenanordnung zulässt.

2. Leitwertsensor nach Anspruch 1,
**dadurch gekennzeichnet,**
**dass** eine Trennebene (19) der Teile oder Baugruppen senkrecht zu der durch die "8" aufgespannten Ebene verläuft.

3. Leitwertsensor nach Anspruch 1 oder 2,
**dadurch gekennzeichnet,**
**dass** die Rohrleitung aus zwei identischen Teilen oder Baugruppen besteht.

4. Leitwertsensor nach einem der Ansprüche 1 bis 3,
**dadurch gekennzeichnet,**
**dass** im Bereich des Kreuzungspunktes der "8" die mit Fluid durchströmbaren Leitungen (26, 27, 28, 29) voneinander getrennt sind.

5. Leitwertsensor nach Anspruch 4,
**dadurch gekennzeichnet,**
**dass** an dem Zulauf (6) und dem Ablauf (8) jeweils ein Stutzen zum Anschluss einer Zulaufleitung bzw. einer Ablaufleitung angeschweißt ist.

6. Leitwertsensor nach einem der Ansprüche 1 bis 5,
**dadurch gekennzeichnet,**
**dass** vier identische Gehäuseteile (2, 3, 4, 5) vorgesehen sind, die jeweils mit einem Deckel (17, 18) zur Bildung einer geschlossenen Rohrleitung verbunden sind.

7. Leitwertsensor nach einem der Ansprüche 1 bis 6,
**dadurch gekennzeichnet,**
**dass** die Deckel als separate Teile ausgebildet sind.

8. Leitwertsensor nach einem der Ansprüche 1 bis 7,
**dadurch gekennzeichnet,**
**dass** an den Gehäuseteilen (2, 3, 4, 5) Haltearme (13, 14, 15, 16) zur Befestigung einer Leiterplatte (21) ausgebildet sind.

9. Leitwertsensor nach einem der Ansprüche 1 bis 8,
**dadurch gekennzeichnet,**
**dass** die Deckel (17, 18) in die Gehäuseteile (2, 3, 4, 5) zur Bildung gekrümmter Strömungswege eingreifen.

10. Verfahren zur Herstellung eines Leitwertsensors nach Anspruch 1 mit den folgenden Schritten:
• Aufstecken je einer Spulenanordnung (10, 11) auf einen mittleren Leitungsabschnitt (28, 29) einer ersten und einer zweiten Baugruppe; und
• Verschweißen der ersten Baugruppe (4, 5) mit der zweiten Baugruppe (2, 3), so dass mit den verschweißten Gehäuseteilen (2, 3, 4, 5) ein Teil einer verzweigten Rohrleitung ausgebildet wird, die in Form einer "8" durchströmbar ist.

11. Verfahren nach Anspruch 10,
**dadurch gekennzeichnet,**
**dass** vor dem Verschweißen der beiden Baugruppen Kerne in die Leitungen (26, 27, 28, 29) eingesetzt und nach dem Verschweißen entfernt werden.

12. Verfahren nach Anspruch 11,
**dadurch gekennzeichnet,**
**dass** an einem Zulauf und einem Ablauf der Gehäuseteile (2, 3, 4, 5) je ein hülsenförmiger Stutzen (6, 8) angeschweißt wird.

13. Verfahren nach einem der Ansprüche 10 bis 12,
**dadurch gekennzeichnet,**
**dass** die Gehäuseteile (2, 3, 4, 5) jeweils mit einem Deckel (17, 18) zur Bildung einer geschlossenen Rohrleitung verschweißt werden.

## Claims

1. Conductivity sensor for a dishwasher, comprising a pipeline which can be flowed through in a figure-of-eight and which, as a yoke, surrounds a coil arrangement having a primary coil (10) and a secondary coil (11), which arrangement is arranged in the region of the crossing point of the "8", an inlet (6) being formed on a first loop and an outlet (8) being formed on a second loop, **characterised in that** the pipeline is formed from at least two parts or subassemblies and **in that** the separation plane of the two parts is arranged in such a way that it allows the coil arrangement to be mounted before the two parts are joined.

2. Conductivity sensor according to claim 1, **characterised in that** a separation plane (19) of the parts or subassemblies extends perpendicular to the plane spanned by the "8".

3. Conductivity sensor according to either claim 1 or claim 2, **characterised in that** the pipeline consists of two identical parts or subassemblies.

4. Conductivity sensor according to any one of claims 1 to 3, **characterised in that** the lines (26, 27, 28, 29) through which liquid can flow are mutually separate in the region of the crossing point of the "8".

5. Conductivity sensor according to claim 4, **characterised in that** a connection piece is welded on both the inlet (6) and the outlet (8) for connecting a supply line and a discharge line respectively.

6. Conductivity sensor according to any of claims 1 to 5, **characterised in that** four identical housing parts (2, 3, 4, 5) are provided which are each connected to a cover (17, 18) in order to form a closed pipeline.

7. Conductivity sensor according to any of claims 1 to 6, **characterised in that** the covers are designed as separate parts.

8. Conductivity sensor according to any of claims 1 to 7, **characterised in that** retaining arms (13, 14, 15, 16) are formed on the housing parts (2, 3, 4, 5) for attaching a printed circuit board (21).

9. Conductivity sensor according to any of claims 1 to 8, **characterised in that** the covers (17, 18) engage in the housing parts (2, 3, 4, 5) in order to form curved flow paths.

10. Method for producing a conductivity sensor according to claim 1, comprising the hollowing steps:
• mounting a coil arrangement (10, 11) onto each central line portion (28, 29) of a first and a second subassembly; and
• welding the first subassembly (4, 5) to the second subassembly (2, 3) such that a part of a branched pipeline is formed by the welded housing parts (2, 3, 4, 5), which pipeline can be flowed through in a figure-of-eight.

11. Method according to claim 10, **characterised in that** cores are inserted into the lines (26, 27, 28, 29) before the two subassemblies are welded and are removed after welding.

12. Method according to claim 11, **characterised in that** a sleeve-shaped connection piece (6, 8) is welded to an inlet and outlet of each housing part (2, 3, 4, 5).

13. Method according to any of claims 10 to 12, **characterised in that** the housing parts (2, 3, 4, 5) are each welded to a cover (17, 18) in order to form a closed pipeline.

## Revendications

1. Capteur de conductance pour un lave-vaisselle, avec une conduite tubulaire qui peut être parcourue en forme de « 8 », et qui entoure en tant que culasse un dispositif de bobines, avec une bobine primaire (10) et une bobine secondaire (11), qui est disposé dans la zone du point d'intersection du « 8 », une alimentation (6) étant constituée sur une première boucle et une évacuation (8) étant constituée sur une deuxième boucle,
**caractérisé en ce que**
la conduite tubulaire est formée d'au moins deux parties ou sous-ensembles, et **en ce que** le plan de séparation des deux parties est disposé de telle sorte que, avant le raccordement des deux parties, il permet un montage du dispositif de bobines.

2. Capteur de conductance selon la revendication 1,
**caractérisé en ce**
**qu'**un plan de séparation (19) des parties ou sous-ensembles est perpendiculaire au plan défini par le « 8 ».

3. Capteur de conductance selon la revendication 1 ou 2,
**caractérisé en ce que**
la conduite tubulaire se compose de deux parties ou sous-ensembles identiques.

4. Capteur de conductance selon une des revendications 1 à 3,
**caractérisé en ce que**
les conduites (26, 27, 28, 29) pouvant être parcourues par du fluide sont séparées les unes des autres dans la zone du point d'intersection du « 8 ».

5. Capteur de conductance selon la revendication 4,
**caractérisé en ce qu'**une tubulure est soudée respectivement sur l'alimentation (6) et sur l'évacuation (8) pour le raccordement d'une conduite d'alimentation ou respectivement d'une conduite d'évacuation.

6. Capteur de conductance selon une des revendications 1 à 5,
**caractérisé en ce**
**qu'**il est prévu quatre parties de boîtier (2, 3, 4, 5) identiques qui sont respectivement raccordées à un couvercle (17, 18) pour la formation d'une conduite tubulaire fermée.

7. Capteur de conductance selon une des revendications 1 à 6,
**caractérisé en ce que**
les couvercles sont constitués en tant que parties séparées.

8. Capteur de conductance selon une des revendications 1 à 7,
**caractérisé en ce que**
des bras de retenue (13, 14, 15, 16) sont constitués sur les parties de boîtier (2, 3, 4, 5) pour la fixation d'une carte de circuit imprimé (21).

9. Capteur de conductance selon une des revendications 1 à 8,
**caractérisé en ce que**
les couvercles (17, 18) engrènent dans les parties de boîtier (2, 3, 4, 5) pour la formation de voies d'écoulement courbes.

10. Procédé de fabrication d'un capteur de conductance selon la revendication 1, comprenant les étapes suivantes :
• montage de respectivement un dispositif de bobines (10, 11) sur un tronçon de conduite central (28, 29) d'un premier et d'un deuxième sous-ensemble ; et
• soudage du premier sous-ensemble (4, 5) avec le deuxième sous-ensemble (2, 3) de telle sorte que, avec les parties de boîtier (2, 3, 4, 5) soudées, il est constitué une partie d'une conduite tubulaire ramifiée qui peut être parcourue en forme de « 8 ».

11. Procédé selon la revendication 10,
**caractérisé en ce que**,
avant le soudage des deux sous-ensembles, des noyaux sont introduits dans les conduites (26, 27, 28, 29) et enlevés après le soudage.

12. Procédé selon la revendication 11,
**caractérisé en ce que**
respectivement une tubulure (6, 8) en forme de manchon est soudée sur une alimentation et sur une évacuation des parties de boîtier (2, 3, 4, 5).

13. Procédé selon une des revendications 10 à 12,
**caractérisé en ce que**
les parties de boîtier (2, 3, 4, 5) sont respectivement soudées avec un couvercle (17, 18) pour la formation d'une conduite tubulaire fermée.
